# EUROPÄISCHE PATENTANMELDUNG

(11) **EP 4 501 095 A1**
(43) Veröffentlichungstag der Anmeldung: **05.02.2025**
(21) Anmeldenummer: 23189271.2
(22) Anmeldetag: 02.08.2023
(51) Int. Cl.: A01C 15/02, A01C 7/10, A01C 7/12, A01G 29/00

(54) **TRAGBARE DOSIER- UND AUSGABEVORRICHTUNG**

(71) Anmelder: Pülscher, Dennis, 26188 Edewecht (DE)
(72) Erfinder: Pülscher, Dennis, 26188 Edewecht (DE)
(74) Vertreter: Weeg, Thomas

(57) **Zusammenfassung**

Die vorliegende Offenbarung bezieht sich auf eine tragbare Dosier- und Ausgabevorrichtung (2) für ein Streugut (46) mit einem Gehäuse (4), in dem ein Streugutzuführungskanal (6), eine mit einer Auslösevorrichtung (12) verbundene Dosiereinheit (10) und zumindest ein Ausgabekanal (8) ausgebildet sind, wobei die Dosiereinheit (10) einen angetriebenen Stellmotor (14) und eine elektronische Steuerung (16) aufweist. Um die Genauigkeit in der Dosierung einer ausgegebenen Düngerportion zu verbessern, wird vorgeschlagen, die Vorrichtung mit einem Zellenrad (18) zu versehen, das zwischen dem Streugutzuführungskanal (6) und dem Ausgabekanal (8) angeordnet ist.

## Beschreibung

Die vorliegende Erfindung bezieht sich auf eine tragbare Dosier- und Ausgabevorrichtung für ein Streugut nach dem Oberbegriff des Anspruchs 1 sowie auf ein Verfahren nach dem Oberbegriff des Anspruchs 14.

Eine gattungsgemäße Dosier- und Ausgabevorrichtung ist aus der Schrift US 2006/0243757 A1 bekannt. Die Vorrichtung wird in Baumschulen und Gärtnereien genutzt, um Pflanzen mit Dünger als ein Beispiel für Streugut zu versorgen, der als Granulat an die Pflanzen ausgegeben wird. Ein Benutzer hält die Vorrichtung beim Gebrauch an einem mit dem Gehäuse verbundenen Griff fest und betätigt einen Abzug, wenn die Vorrichtung eine Düngerportion abgeben soll. Mit der Betätigung des Abzugs wird eine elektronische Steuerung aktiviert, die über einen mit der elektronischen Steuerung verbundenen Stellmotor einen Schieber aus einer Schließstellung in eine Offenstellung bewegt, wodurch eine Öffnung freigegeben wird, durch die hindurch das Granulat aus dem Streugutzuführungskanal in den Ausgabekanal rieseln und von dort zu den Pflanzen gelangen kann. Um die Menge des Granulats, die in einem Öffnungszyklus aus dem Streugutzuführungskanal auf eine Pflanze rieselt, auf einen gewünschten Wert zu beschränken, kann über die elektronische Steuerung die Länge eines Zeitintervalls vorgewählt werden, die der Schieber in der Offenstellung verbleibt. Je größer das Zeitintervall vorgewählt wurde, umso mehr Granulat kann während dieses Zeitintervalls aus dem Streugutzuführungskanal in den Ausgabekanal und von dort auf die zu düngende Pflanze rieseln.

Der in der Dosiereinheit verwendete Schieber ist problematisch, weil er sich während des Betriebs verklemmen kann. Der Schieber kann sich in seiner Kulissenführung verkanten, oder er verklemmt sich mit Granulat. Setzt der Schieber beim Schließen auf ein oder mehrere harte Körner des Granulats auf, ohne dass diese dabei zerdrückt werden, bleibt die Öffnung, durch die Granulat in den Ausgabekanal rieselt, zumindest teilweise offen, und es kann zu einer Überdüngung einer Pflanze kommen, oder es geht herausrieselndes Granulat verloren. Schließlich können sich die Führungen des Schiebers mit Schmutz zusetzen, durch die der Schieber schließlich blockiert. Eine Reinigung der Führungen ist sehr aufwendig, da dafür die Vorrichtung teilweise demontiert und später wieder zusammengesetzt werden muss. Die Dosierung ist auch ungenau, weil die in den Ausgabekanal rieselnde Menge an Granulat davon abhängig ist, in welcher Winkelstellung die Vorrichtung gehalten wird. Bei einer waagerechten räumlichen Lage des Streugutzuführungskanals kann es beispielsweise dazu kommen, dass trotz einer voll geöffneten Öffnung kein Granulat aus dem Streugutzuführungskanal in den Ausgabekanal rieselt. Bei einer nicht ausreichenden Schrägstellung rieselt zu wenig Granulat im vorgegebenen Zeitintervall aus dem Streugutzuführungskanal.

Aus landwirtschaftlichen Sä- und Düngemaschinen, die von einem Traktor gezogen und angetrieben werden, ist es bekannt, Zellenräder zu verwenden, um den Gutstrom des granulatförmigen Saatguts oder des Düngemittels innerhalb der Maschine zu kanalisieren. Beispiele hierfür finden sich in den Schriften EP 0 094 583 A1, DE 10 2013 110 991 B3 oder DE 10 2015 210 212 A1. Die dort verwendeten Zellenräder dienen allerdings nur einer annähernden Kanalisierung eines kontinuierlichen Gutstroms, da sich an die dort verwendeten Zellenräder in Förderrichtung immer noch gesonderte Vereinzelungs- und Dosieraggregate an die Zellenräder anschließen.

Es ist die Aufgabe der vorliegenden Erfindung, die Funktion der vorbekannten tragbaren Dosier- und Ausgabevorrichtung zu verbessern.

Die Aufgabe wird für eine gattungsgemäße Dosier- und Ausgabevorrichtung mit den kennzeichnenden Merkmalen des Anspruchs 1 gelöst. Die Aufgabe wird für ein Verfahren nach dem Oberbegriff des Anspruchs 14 durch die kennzeichnenden Merkmale des Anspruchs 14 gelöst.

In der Förderstrecke zwischen dem Streugutzuführungskanal und dem Ausgabekanal ist als Dosiereinheit ein vom Stellmotor angetriebenes Zellenrad verwendet, das mit dem von der elektronischen Steuerung gesteuerten Stellmotor antreibbar ist. Anders als aus den landwirtschaftlichen Sä- und Düngermaschinen bekannt wird in der erfindungsgemäßen Dosier- und Ausgabevorrichtung das Zellenrad sowohl für die präzise Dosierung als auch für die Ausgabe der ausdosierten Menge des auszugebenden Streuguts verwendet. In der Anwendung als tragbare Dosier- und Ausgabevorrichtung geht es nicht darum, einen kontinuierlichen Volumenstrom sicherzustellen, sondern in zeitlich eng aufeinanderfolgenden Intervallen in kurzer Zeit eine möglichst präzise dosierte geringe Menge des jeweiligen Streuguts auszugeben. Der Anwender der tragbaren Dosier- und Ausgabevorrichtung geht mit diesem Gerät in einer Baumschule oder Gärtnerei an einer Vielzahl von Pflanzen entlang, die mit einer bestimmten Düngermenge gedüngt werden sollen. Um diese Aufgabe zu erledigen, genügt es, die erfindungsgemäß ausgestaltete tragbare Dosier- und Ausgabevorrichtung mit ihrem Abgabeende, das sich am äußersten Ende des Ausgabekanals befindet, an eine zu düngende Pflanze zu halten, eine Rotationsbewegung des Zellenrades über den von der elektronischen Steuerung gesteuerten Stellmotor auszulösen und abzuwarten, dass die ausdosierte Menge an Streugut aus dem Ausgabekanal auf die Pflanze fällt. Dabei kann das Zellenrad und dessen Peripherie im Gehäuse so ausgelegt sein, dass ein Betrieb immer nur in einer Rotationsrichtung vorgesehen ist, oder die Rotationsrichtung kann von einem Nutzer vorwählbar sein, wobei dann die Peripherie um das Zellenrad herum entsprechend anders ausgestaltet ist. Die Umgebung des Zellenrades ist dabei an die mögliche Rotationsrichtung des Zellenrads angepasst gestaltet, insbesondere, was die räumliche Lage und Größe der Befüllungsöffnung, der Entleerungsöffnung und geschlossen ausgeführter Schachtwände sowie des Abstreifers und weiterer harter Abstreifkanten anbelangt. danach kann der Anwender mit dem Gerät die nächste Pflanze düngen. Da das Zellenrad die darin gespeicherte Menge an Streugut zwangsweise fördert, ist dadurch sichergestellt, dass eine in den Zellen vorgehaltene Portion des Streuguts unabhängig von der Schrägstellung des Geräts in vertikaler Richtung abgegeben wird, in der die tragbare Dosier- und Ausgabevorrichtung von einem Anwender jeweils gehalten wird. Die zwangsweise Abförderung eine Düngerportion aus dem Streugutzuführungskanal in den Ausgabekanal funktioniert unabhängig von der Schrägstellung, in der einen Anwender das Gerät hält.

In dem Zellenrad können mehrere Zellen ausgebildet sein. Je nachdem, um wie viele Zellen das Zellenrad dann nach einer einmaligen Aktivierung des Antriebs von der elektronischen Steuerung an dem Abstreifer entlang bis in den Bereich des Ausgabekanals weitergedreht wird, gelangt dabei der Volumeninhalt dieser Zellen aus dem Bereich des Streugutzuführungskanals in den Bereich des Ausgabekanals und kann von dort aus der tragbaren Dosier- und Ausgabevorrichtung herausrieseln. Die Größe des Drehwinkels, um den sich das Zellenrad bei der Ausgabe einer Düngerportion weiter dreht, kann automatisch von der Steuerung bestimmt werden, oder sie wird vom Anwender bestimmt, indem dieser eine bestimmte Zahl an Zellen vorgibt, um die sich das Zellenrad weiter drehen soll, oder der Anwender gibt eine Streugutmenge - beispielsweise nach Gewicht - für eine Düngerportion vor, für die die Steuerung dann die Anzahl der Zellen bestimmt, um die das Zellenrad weiter gedreht wird, um die gewünschte Düngermenge zumindest annähernd genau auszugeben.

Die elektronische Steuerung kann auch mit einer geeigneten Sensorik verbunden sein, über die die benötigte Düngermenge über eine entsprechend programmierte Software bestimmt wird. So kann die Steuerung an eine Kamera mit Bildauswertung angeschlossen sein, die über ein damit verbundenes Expertensystem die benötigte Düngermenge bestimmt, oder es wird ein mit der Steuerung verbundener Stickstoffsensor in einen Pflanzentopf gesteckt, um die Düngermenge in Abhängigkeit von dem gemessenen Stickstoffwert zu bestimmen. Auf diese Weise ist eine bedarfsgerechte und umweltfreundliche Bestimmung der für eine Düngergabe genau richtigen Menge einer Düngerportion möglich.

Die elektronische Steuerung kann darauf ausgelegt sein, ausgegebene Düngermengen einer bestimmten Pflanze oder einer Georeferenz zuzuordnen. Eine bestimmte Pflanze kann beispielsweise anhand eines Barcodes oder eines sonstigen Identifizierungsmittels erkannt werden. Über die Speicherung und Zuordnung einer ausgegebenen Düngermenge zu einer Pflanze oder einer Bodenfläche können entsprechende Düngenachweise erbracht werden, oder die erhobenen Daten stehen für Auswertungszwecke zur Verfügung, wie beispielsweise einer betrieblichen Wirtschaftlichkeitsberechnung oder für die Erstellung einer Umweltbilanz. Die Daten können auf einem Speichermedium gespeichert oder über eine entsprechende Schnittstelle der elektronischen Steuerung für andere Datenverarbeitungsgeräte verfügbar gemacht werden.

Das Zellenrad kann aber auch so ausgebildet sein, dass es nur zwei Zellen aufweist, die durch eine Wand voneinander getrennt sind, die das Zellenrad etwa oder genau mittig unterteilt. Um mit dieser Ausgestaltung eine gewünschte Menge des Streuguts aus dem Streugutzuführungskanal auszudosieren, kann das Zellenrad zunächst in eine erste Richtung bewegt werden, um den Streugutzuführungskanal im Bereich des Abstreifers für den Durchtritt des Streuguts zu öffnen. Wenn über ein Zeitintervall eine gewünschte Menge an Streugut aus dem geöffneten Streugutzuführungskanal ausgetreten ist, kann das Zellenrad in die erste Richtung weiter gedreht werden, bis die die Zellen voneinander trennende Wand die im Bereich des Abstreifer gebildete Öffnung wieder schließt, oder das Zellenrad kann in die der ersten Richtung entgegengesetzte zweite Richtung zurückgedreht werden, bis die die Zellen voneinander trennende Wand zusammen mit dem Abstreifer den Streugutzuführungskanal wieder schließt.

Das Volumen von Zellen, die im Zellenrad ausgebildet sind, kann der elektronischen Steuerung bekannt sein, beispielsweise, indem der Volumenwert in einem elektronischen Speicher zugreifbar abgelegt ist. Indem die Steuerung und/oder ein Bediener vor der Ausgabe einer Düngerportion bestimmt, um wie viele Zellen das Zellenrad weitergedreht werden soll, wird über diese Bestimmung die Ausgabemenge festgelegt, die das Zellenrad als eine Düngerportion ausgibt.

Der für den Antrieb des Zellenrads verwendete Stellmotor wird von der elektronischen Steuerung gesteuert. Die elektronische Steuerung ist mit einer geeigneten Software versehen, um Bediensignale vom Anwender zu empfangen, weiterzuverarbeiten und daraus Stellsignale an den Stellmotor zu generieren. Als Bediensignal kann beispielsweise ein Knopfdruck empfangen werden, mit dem vom Anwender die Ausgabe einer Düngerportion angefordert wird. Die elektronische Steuerung bestimmt, um wie viele Winkelgrade das Zellenrad vom Stellmotor gedreht werden soll und gibt ein entsprechendes Signal an den Antriebsmotor aus. Die Bewegung des Stellmotors und damit mittelbar auch des Zellenrads kann dabei ebenfalls von den elektronischen Steuerungen überwacht werden. Der Stellmotor kann von der elektronischen Steuerung beispielsweise zeitgesteuert über die Einschaltdauer geregelt werden. Dabei steht eine bestimmte Zeitdauer, die der Stellmotor läuft, für eine Zelle des Zellenrads. Am Stellmotor und/oder dem Zellenrad kann aber auch ein Drehwinkelsensor angeordnet sein, über dessen Signale der Stellmotor gesteuert wird. Hier entspricht ein bestimmter Drehwinkel, um den sich das Zellenrad dreht, einer Zelle. Für die Steuerung der Stellmotos können aber auch andere Sensoren verwendet werden, wie beispielsweise Fotozellen, Magnete, Hallsensoren und dergleichen.

Zwischen dem Streugutzuführungskanal und dem Außenumfang des Zellenrads ist eine Befüllungsöffnung ausgebildet. Durch die Befüllungsöffnung kann in dem Streugutzuführungskanal bevorratetes Streugut schwerkraftgetrieben in die Zellen des Zellenrads hineinrieseln, insbesondere, wenn sich die Dosier- und Ausgabevorrichtung in der Gebrauchsstellung befindet. Ein gesonderter Antrieb ist nicht erforderlich. Da die Dosier- und Ausgabevorrichtung beim Gebrauch von einer Person getragen wird, ist der im Gehäuse des Geräts angeordnete Streugutzuführungskanal ständig in Bewegung, und dadurch erhält das im Streugutzuführungskanal bevorratete Streugut ständig Impulse, in die Zellen des Zellenrads nachzurutschen. Die Raumform des Streugutzuführungskanals kann so gestaltet sein, dass sie sich in der Gebrauchsstellung der Dosier- und Ausgabevorrichtung nach unten hin und damit auf den Abstreifer zu verjüngt. Durch diese Raumform wird ein Nachrutschen von Streugut bis an die an den Außenumfang des Zellenrads heranreichende Kante des Abstreifers begünstigt.

Bei dem Streugut kann es sich beispielsweise um ein körniges, pulverförmiges oder granulares Gut oder eine Mischform dieser Feststoffe handeln. Als Streugut kann beispielsweise Dünger, Pflanzenschutzmittel oder Saatgut ausgegeben werden.

Wenn in dieser Beschreibung davon die Rede ist, dass sich die Dosier- und Ausgabevorrichtung in der Gebrauchsstellung befindet, so ist damit gemeint, dass diese in einer räumlichen Lage gehalten wird, in der das Abgabeende des Ausgabekanals in vertikaler Richtung tiefer liegt als der Griff, an dem die Dosier- und Ausgabevorrichtung gehalten wird, und sich in vertikaler Richtung gesehen der Streugutzuführungskanal oberhalb des Ausgabekanals befindet.

Je nachdem, wie groß der Streugutzuführungskanal ausgebildet ist, kann auch das Eigengewicht des darin bevorrateten Streuguts die im unteren Bereich der Schichtung befindlichen Partikel in die Zellen des Zellenrads hineindrücken. Der Streugutzuführungskanal ist so bemessen, dass in ihm eine größere Zahl von Düngerportionen bevorratet werden kann. Wenn der Streugutzuführungskanal ein kleineres Volumen aufweist, damit das Gerät insgesamt leichter handhabbar und gut ausbalanciert ist, kann stromaufwärts an den Streugutzuführungskanal noch ein gesonderter Vorratstank angeschlossen oder anschließbar sein, in dem eine zusätzliche Menge des Streuguts bevorratet ist. Die Befüllungsöffnung zwischen dem Streugutzuführungskanal und den Zellen des Zellenrads hat eine passend gewählte Größe, um das Hineinrieseln der Partikel des Streuguts in die Zellen des Zellenrads nicht zu behindern und eine passende Füllung der Zellen zu erreichen. Die Größe der Befüllungsöffnung kann auch verstellbar ausgebildet sein.

Im Umfangsbereich des Zellenrads ist ein Abstreifer angeordnet, dessen dem Zellenrad zugewandte vordere Kante bis an den Umfangskreis des Zellenrades heranreicht. Der Begriff des "Heranreichens" deckt sowohl ein körperliches Anstoßen der vorderen Kante des Abstreifers an das Zellenrad als auch eine Anordnung des Abstreifers in einer Position ab, in der sich zwischen der vorderen Kante des Abstreifers und dem Umfangskreis des Zellenrads ein Spalt ergibt. Der Spalt ist dabei aber so schmal, dass ein im Streugutzuführungskanal befindliches Streugut nicht durch den Spalt vom Streugutzuführungskanal in den Ausgabekanal fallen kann, wenn das Zellenrad in einer Drehstellung steht, in der eine Zellwand der vorderen Kante des Abstreifers genau gegenübersteht. Der Abstreifer hat einer Doppelfunktion. Einerseits verhindert er bei einem stillstehenden Zellenrad, dass Streugut ungewollt aus dem Streugutzuführungskanal an dem Außenumfang des Zellenrads vorbei in den Ausgabekanal hindurchrutschen kann. Bei einem drehenden Zellenrad rotiert dieses mit seinem Außenumfang an der vorderen Kante des Abstreifers entlang. Ein Partikel des Streuguts, der über den Außenumfang des Zellenrads hervorsteht, stößt dabei an den Abstreifer an. Bei einer fortgesetzten Drehbewegung des Zellenrades blockiert der Abstreifer dann den Partikel und verhindert auf diese Weise, dass dieser in den Bereich des Ausgabekanals gelangen kann, oder der Abstreifer drückt den Partikel in die Tiefe der den Abstreifer passierenden Zelle des Zellenrades hinein, sodass diese gut gefüllt den Abstreifer passiert und sich nach der Passage des Abstreifers in den Ausgabekanal hinein entleeren kann. Der Abstreifer stellt auf diese Weise eine zumindest annähernd gleichmäßige Befüllung jeder einzelnen Zelle des Zellenrades mit Streugut sicher.

Der Abstreifer bildet zumindest einen Teil des Bodens des Streugutzuführungskanals. Wenn der Abstreifer zumindest einen Teil des Bodens des Streugutzuführungskanal bildet, steht das im Streugutzuführungskanal bevorratete Streugut als Materialsäule bis zum Abstreifer herunter am Außenumfang des Zellenrades und an der Befüllungsöffnung an. Dadurch wird gewährleistet, dass der Abstreifer bei einer Drehung des Zellenrads immer noch nachrutschendes Streugut in die Tiefe einer Zelle drücken kann, wenn diese nicht vollständig gefüllt ist. Andererseits steht durch diese Anordnung oberhalb des Abstreifers genügend Raum im Streugutzuführungskanal zur Verfügung, um vom Abstreifer vom Außenumfang des Zellrades abgestreifte Partikel zurückzuhalten und diese in den Streugutzuführungskanal zurückdrücken zu können.

Anders als im vorbekannten Stand der Technik ist der Abstreifer ein passives Trennelement, das den Streugutzuführungskanal vom Ausgabekanal trennt. Da es sich nicht selbst angetrieben bewegt, kann es sich beim Gebrauch nicht verklemmen. Es dichtet den Streugutzuführungskanal dadurch funktionssicherer ab als der vorbekannte Schieber. An dem Abstreifer eventuell anhaftende Schmutzpartikel werden von dem daran vorbeistreifenden Streugut ständig mitgenommen, sodass sich in diesem Bereich kein Schmutz aufbauen kann.

In der Gebrauchsstellung der Dosier- und Ausgabevorrichtung ist in einer Ebene unterhalb der vorderen Kante des Abstreifers eine Entleerungsöffnung ausgebildet. Die Entleerungsöffnung ist in der Weise gestaltet, dass der Umfangsbereich um das Zellenrad herum nicht durch eine Wandung geschlossen ist, sodass das Streugut, das sich in den in diesem Bereich befindlichen Zellen befindet, schwerkraftbedingt aus den Zellen herausrieseln und durch die Entleerungsöffnung nach unten in den sich an die Entleerungsöffnung anschließenden Ausgabekanal fallen kann.

Der Ausgabekanal ist in der Gebrauchsstellung der Dosier- und Ausgabevorrichtung unterhalb des Abstreifers angeordnet. Bei einem unterhalb des Abstreifers angeordneten Ausgabekanal können die bei einer Drehung des Zellenrads in den Zellen des Zellenrads befindlichen Partikel des Streuguts nach dem Passieren des Abstreifers allein durch die Einwirkung der Schwerkraft aus den Zellen heraus und in den Ausgabekanal hineinrutschen, ohne dabei mit dem Abstreifer zu kollidieren oder in ihrer Bewegung durch den Abstreifer behindert zu werden. Auch eventuell im Streugutzuführungskanal vorhandene Schmutzpartikel können durch die Entleerungsöffnung in den Ausgabekanal fallen und von dort vom Streugut mitgenommen werden.

Im Ergebnis ermöglicht die erfindungsgemäß ausgestaltete tragbare Dosier- und Ausgabevorrichtung eine sehr genaue und störungsfreie Ausdosierung und Abgabe einzelner Düngerportionen aus einer vorgehaltenen Menge von Streugut.

Die erfindungsgemäß ausgestaltete tragbare Dosier- und Ausgabevorrichtung kann zeitweise auch als stationär genutzte Düngevorrichtung in einer stationären Förderanlage für Pflanzen verwendet sein. Als stationäre Förderanlagen für Pflanzen kommen beispielsweise Topfmaschinen in Betracht, in denen angezüchtete Pflanzen erstmals in einen Topf eingetopft oder aus einem kleineren Topf in einen größeren Topf umgetopft werden. Stationäre Förderanlagen werden auch dazu benutzt, auf einem Förderband stehende und mit dem Förderband an einer Schneidvorrichtung entlang beförderte Pflanzen zu beschneiden. Stationäre Förderanlagen für Pflanzen können insbesondere auch in einem automatisierten Betrieb betrieben werden. Um im stationären Betrieb mit ausreichend Streugut versorgt zu sein, wird das Gerät bevorzugt mit einem großen Vorratstank verbunden, um im Dauerbetrieb Düngerportionen ausgeben zu können. Die elektronische Steuerung kann eine Schnittstelle zu einer Steuerung einer stationären Förderanlage für Pflanzen aufweisen, um von dieser gesteuert zu werden. Die Auslösung kann durch ein elektrisches Signal erfolgen, dass entweder von der stationären Förderanlage für Pflanzen und/oder einem Sensor, wie beispielsweise einer Lichtschranke, erzeugt wird.

Das erfindungsgemäße Verfahren ist darauf gerichtet, dass die Dosierung mittels eines Zellenrads erfolgt, das in der Förderstrecke zwischen dem Streugutzuführungskanal und dem Ausgabekanal als Dosiereinheit verwendet ist und das mit dem von der elektronischen Steuerung gesteuerten Stellmotor antreibbar ist, wobei das im Streugutzuführungskanal an den Umfangsbereich des Zellenrads anstehende Streugut bei einer Rotationsbewegung des Zellenrads von einem im Umfangsbereich des Zellenrads angeordneten Abstreifer zurückgehalten wird, dessen dem Zellenrad zugewandte vordere Kante bis an den Umfangskreis des Zellenrads heranreicht. Die Vorteile dieses Verfahrens lassen sich den vorstehenden Erläuterungen zu einer erfindungsgemäßen Dosier- und Ausgabevorrichtung entnehmen.

Nach einer Ausgestaltung der Erfindung wird die Befüllungsöffnung in Rotationsrichtung des Zellenrads vom Abstreifer begrenzt. Bei dieser Ausgestaltung wird vermieden, dass es zwischen dem unteren Ende des Ausschnitts für die Befüllungsöffnung und dem Abstreifer eine Stufe gibt, die die Befüllung der Zellen des Zellenrads mit Streugut behindern könnte. Der Streugutzuführungskanal, der bis zum Abstreifer hinunterreicht, mündet in einer Befüllungsöffnung, deren Ausschnitt zumindest nach unten hin der Erstreckung entspricht, die auch die Befüllungsöffnung bis zum Abstreifer hin aufweist.

Nach einer Ausgestaltung der Erfindung befindet sich die Befüllungsöffnung am Außenumfang des in der Gebrauchsstellung der Dosier- und Ausgabevorrichtung oberen Teils des Zellenrads. Bei dieser Positionierung der Befüllungsöffnung kann das Streugut allein durch Schwerkraft gut in die Zellen des Zellenrads hineinrieseln.

Nach einer Ausgestaltung der Erfindung ist der Abstreifer oder das Zellenrad aus einem flexiblen Material hergestellt. Durch die Verwendung eines flexiblen Materials, wie beispielsweise einem Elastomer oder einem Moosgummi, kann der Abstreifer oder das Zellenrad auf Kraftspitzen flexibel mit einer Ausweichbewegung reagieren. Als Abstreifer aus einem flexiblen Material ist auch eine Bürste anzusehen, deren Borsten sich bei der Einwirkung von entsprechenden Kräften verbiegen. Eine Kraftspitze kann bei einer Rotationsbewegung des Zellenrads auftreten, wenn vom Zellenrad bewegtes Streugut an die dem Zellenrad zugewandte Kante des Abstreifers stößt. Während der aus dem Stand der Technik vorbekannte Schieber aus einem harten Material hergestellt ist und deshalb die überstehende Spitze des StreugutPartikels entweder abgebrochen werden muss oder, wenn das nicht gelingt, der Schieber blockiert ist, kann der aus einem elastomeren Material bestehende Abstreifer die Partikelspitze durch eine Ausweichbewegung passieren lassen und danach unmittelbar wieder in die Ausgangsstellung zurück schnappen, um den Streugutzuführungskanal wieder zu schließen und die ordnungsgemäße Befüllung der Zellen des Zellenrads sicherzustellen. Derselbe Effekt kann erzielt werden, wenn der Abstreifer aus einem harten, nicht flexiblen Material und das Zellenrad aus einem flexiblen Material gefertigt ist. Der Materialverschleiß am Abstreifer und am Zellenrad wird dadurch geringgehalten, das Risiko, dass sich das Streugut oder Teile der Dosierungsvorrichtung verklemmen können, ist verringert, und auch das Risiko, dass das Zellenrad blockieren könnte, ist vermindert. Eventuelle Dosierungenauigkeiten, die sich aus der Ausweichbewegung des Abstreifers ergeben könnten, sind vernachlässigbar gering.

Nach einer Ausgestaltung der Erfindung ist der Abstreifer im Gehäuse in einer lösbaren Befestigung austauschbar gehalten. Bei einer lösbaren Befestigung kann es sich beispielsweise um eine Schraubbefestigung, eine klemmende Befestigung, eine formschlüssige Befestigung, beispielsweise mit einem Schwalbenschwanz, eine Clipsbefestigung, oder vergleichbare Befestigungen handeln. Die lösbare Befestigung ermöglicht den schnellen, gegebenenfalls sogar werkzeuglosen Austausch des Abstreifers, wenn dieser verschlissen ist. Je nach Partikelgröße des auszudosierenden Streuguts kann es aber auch vorteilhaft sein, unterschiedliche Abstreifer zu verwenden, die nach Bedarf gegeneinander ausgetauscht werden können. Bei einem feinen, pulverartigen Streugut muss der Abstreifer mit seinem zum Zellenrad weisenden Rand direkt oder nur mit einem kleinen Spalt an den Umfang des Zellenrads heranreichen, um den Streugutzuführungskanal funktionssicher zu schließen. Bei einem groben Streugut ist hingegen ein größerer Spalt zwischen dem zum Zellenrad weisenden Rand des Abstreifers und dem Umfang des Zellenrads sinnvoll, um Ausweichbewegungen beim Abstreifen von Partikeln zu verringern und ein Verklemmen des Abstreifers mit Partikeln und dem Zellenrad zu vermeiden. Bei einem groben Streugut würden auch bei einem größeren Spalt zwischen dem zum Zellenrad weisenden Rand des Abstreifers und dem Umfang des Zellenrads keine unerwünschten Verluste von Streugut aus dem Streugutzuführungskanal drohen, solange der Spalt schmaler ist als der Durchmesser des kleinsten Partikels des darin bevorrateten Streuguts.

Nach einer Ausgestaltung der Erfindung ist der Abstreifer in seiner räumlichen Lage verstellbar in einer Befestigung gehalten. Durch eine Verstellung des Abstreifers seiner räumlichen Lage an insbesondere die Größe des Spalts zwischen der vorderen Kante des Abstreifers und des Umfangskreises des Zellenrads verändert werden. So kann die Größe des Spalts beispielsweise verringert werden, wenn sich der Spalt als Folge von Verschleiß vergrößert hat. Mit einer Veränderung der Größe des Spalts kann der Abstreifer auch auf unterschiedlich große Partikel unterschiedlichen Streuguts eingestellt werden, um die Trennfunktion des Abstreifers zu optimieren.

Nach einer Ausgestaltung der Erfindung ist das Zellenrad in einem Schacht im Gehäuse gelagert, in dem der Streugutzuführungskanal und der Ausgabekanal münden, in der Wandung des Schachts sind die Befüllungsöffnung und die Entleerungsöffnung ausgebildet, und das Zellenrad ist in axialer Richtung durch eine Wartungsöffnung in den Schacht einsetzbar und aus dem Schacht entnehmbar. Durch diese Ausgestaltung ergibt sich ein leicht montierbarer Zusammenbau der Dosier- und Ausgabevorrichtung, indem das Zellenrad bei der Montage in den Schacht eingesetzt wird und sich dadurch in einer gebrauchsfertigen Position im Verhältnis zum Streugutzuführungskanal und zum Ausgabekanal befindet. Der Schacht kann beim Gebrauch des Geräts an der Wartungsöffnung mit einer Abdeckung verschlossen werden. Wenn das Zellenrad gereinigt oder ausgetauscht werden soll, kann auch das auf einfache Weise durch die Wartungsöffnung erfolgen. Auch wenn ein Zellenrad eines ersten Typs gegen ein Zellenrad eines zweiten Typs ausgetauscht werden soll, ist das durch den Schacht auf einfache Weise möglich. Unterschiedliche Typen von Zellenrädern können herstellerseitig vorgehalten werden, um den Kunden eine einfache Anpassung der Vorrichtung an unterschiedliche Streugüter zu ermöglichen. der Schacht kann durch geeignet geformte Kunststoffformteile hergestellt werden, die einstückig mit anderen Teilen des Gehäuses verbunden sind. Auch dadurch wird die Herstellung vereinfacht. Außerhalb der Befüllungs- und Entleerungsöffnungen kann der Schacht im Umfangsbereich des Zellenrads geschlossen ausgeführt sein, um einen Schmutzeintrag aus dem Zellenrad in andere Teile des Geräts zu vermeiden.

Nach einer Ausgestaltung der Erfindung sind der Schacht und/oder Teile des Schachts austauschbar ausgestaltet. Nach einem längeren Gebrauch der Vorrichtung können die Oberflächen des Schachtes oder von Teilen des Schachtes durch einen Materialabtrag so stark geschädigt sein, dass diese Teile ausgewechselt werden müssen. Wenn der Schacht und/oder Teile des Schachtes austauschbar ausgestaltet sind, ist eine einfache Reparatur der Vorrichtung möglich. Es ist auch möglich, für den Schacht oder Teile des Schachtes unterschiedlich geformte Muster vorzuhalten, die gegeneinander austauschbar sind. Die unterschiedlich geformten Schächte oder Teile von Schächten können auf ein unterschiedliches Streugut oder eine unterschiedliche Dosiertechnik ausgelegt sein. So können beispielsweise die Öffnungen in der Schachtwand für die Befüllungsöffnung und die Entleerungsöffnung unterschiedlich groß und/oder an einer unterschiedlichen Stelle angeordnet sein. Sie können auch auf unterschiedliche Rotationsrichtungen des Zellrades hin optimiert sein. Mit der Austauschbarkeit ist gemeint, dass der Schacht und/oder Teile des Schachtes zerstörungsfrei aus der Vorrichtung ausgebaut und mit einem geringen Arbeitsaufwand wieder eingebaut werden können. Um die Montage und Demontage zu vereinfachen, können beispielsweise Klemm- oder Clipsbefestigungen vorgesehen sein, die werkzeuglos brauchbar sind. Auch Schraubbefestigungen ermöglichen einen einfachen Austausch von Bauteilen.

Nach einer Ausgestaltung der Erfindung ist die Größe der Befüllungsöffnung und/oder der Zellen mit einer Verstellvorrichtung verstellbar ausgebildet. Ist die Größe der Befüllungsöffnung und/oder der Zellen mit einer Verstellvorrichtung verstellbar, ist es möglich, die Zellen nicht immer jeweils nur mit dem maximal möglichen Volumen zu befüllen, sondern auch nur mit einer Teilmenge des maximalen Volumens. Das Volumen der Zellen kann beispielsweise durch Raumkörper veränderlich sein, die nach Bedarf mehr oder weniger tief in die Zellen des Zellenrades eintauchen. Die Größe der Befüllungsöffnung kann mit einem in der Schachtwand angeordneten Verstellring verändert werden, der je nach Drehstellung als Blende in den freien Querschnitt der Befüllungsöffnung und/oder der Entleerungsöffnung verdreht werden kann. Die Größe der Befüllungsöffnung und/oder der Zellen kann manuell vom Anwender oder elektronisch über die elektronische Steuerung mit einem damit verbundenen Verstellmotor verstellbar sein. Bei veränderlichen Größen der Befüllungsöffnung und/oder der Zellen kann die Größe einer einzelnen auszudosierenden Düngerportion dichter an einen vorgewählten Sollwert herangeführt werden.

Nach einer Ausgestaltung der Erfindung ist die elektronische Steuerung mit einem Sensor verbunden, mit dem das nutzbare Volumen der Zellen ermittelbar ist. Der Sensor kann beispielsweise aus einer magnetischen Meßvorrichtung bestehen, die die aktuell eingestellte Position einer Verstellvorrichtung misst. Aus dem vom Sensor an die elektronische Steuerung übermittelten Messwert kann die elektronische Steuerung mittels einer Software ermitteln, wie groß das aktuell in einer einzelnen Zelle des Zellenrads verfügbare Volumen ist.

Um beispielsweise eine Düngerportion von 12 g auszudosieren, könnten mit einem Zellenrad, dessen Zellen eine maximale Menge des Streuguts von 7 g aufzunehmen vermögen, zwei Zellen vollständig mit Dünger befüllt und anschließend in den Ausgabekanal hinein entleert werden, was einer einzelnen Düngerportion von 14 g entsprechen würde. Das Ausdosieren einer Düngerportion von 14 g bei der Entleerung von zwei vollen Zellen liegt näher am gewünschten Sollwert von 12 g als eine Ausdosierung, bei der nur eine einzige Zelle von 7 g befüllt und entleert wird. Die Differenz beträgt bei einer Düngerportion aus zwei vollen Zellen nur 2 g Überschuss, während die Differenz bei der Ausdosierung von nur einer einzigen vollen Zelle mit 7 g einer Unterdeckung von 5 g entspräche. Wenn in diesem Fall die Befüllungsöffnung und/oder die Zellen vor ihrer Befüllung mit Streugut verkleinert worden wären, beispielsweise um 10 %, würde die maximal mögliche Füllung der Zellen nur noch jeweils 6,3 g betragen. Bei der Befüllung und anschließenden Entleerung dieser beiden verkleinerten Zellen würde sich dann eine einzelne über zwei Zellen bereitgestellte Düngerportion von 12,6 g ergeben, deren Größe mit einem Überschuss von nur 0,6 g dichter am gewünschten Sollwert liegt als die Größe der Düngerportion mit maximal großen Zellen von 14 g. Wenn drei Kammern zur Ausdosierung einer einzelnen Düngerportion verwendet werden, deren Volumen jeweils um 40 % auf ein Restvolumen von 60 % des maximalen Füllvolumens reduziert worden ist, würde sich daraus ebenfalls eine Düngerportion von 12,6 g ergeben.

Die erfindungsgemäß ausgestaltete tragbare Dosier- und Ausgabevorrichtung kann zeitweise auch als stationär genutzte Düngevorrichtung in einer stationären Förderanlage für Pflanzen verwendet sein. Dazu wird das Gerät bevorzugt mit einem gro-βen Vorratstank verbunden, um im Dauerbetrieb Düngerportionen ausgeben zu können.

Nach einer Ausgestaltung der Erfindung kann die elektronische Steuerung eine Schnittstelle zu einer Steuerung einer stationären Förderanlage für Pflanzen aufweisen, um von dieser gesteuert zu werden. Die Auslösung kann durch ein elektrisches Signal erfolgen, dass entweder von der stationären Förderanlage für Pflanzen und/oder einem Sensor, wie beispielsweise einer Lichtschranke, erzeugt wird. Die tragbare Dosier- und Ausgabevorrichtung kann auf diese Weise auch als ein automatisiert arbeitender Bestandteil einer stationären Förderanlage für Pflanzen genutzt werden, wenn sie in einer mobilen Anwendung nicht gebraucht wird.

Nach einer Ausgestaltung der Erfindung ist der Ausgabekanal um ein Stichwerkzeug verlängert. Das Stichwerkzeug kann dazu genutzt werden, um in den Erdballen einer Pflanze eingestochen zu werden, damit die Düngerportion dichter an der Wurzel einer Pflanze positioniert werden kann. Das Stichwerkzeug bildet auf diese Weise einen Applikator. Der Applikator kann einen zusätzlichen Handhebel aufweisen, um ein beim Einstechen des Stichwerkzeugs in den Boden gebildetes Loch zu vergrö-ßern. Der Handhebel kann mit der elektronischen Steuerung verbunden sein, sodass er bei seiner Betätigung das Ausdosieren einer Düngerportion auslöst. Das Stichwerkzeug kann auch ein Verstärkungselement aufweisen, mit dem eine manuell erzeugte Stichkraft erhöht wird. Bei dem Verstärkungselement kann es sich beispielsweise um einen Schwingungserzeuger oder um eine Spannfeder handeln, bei deren Auslösung das Stichwerkzeug tiefer in einen Stichkanal hineingedrückt wird, ohne dass dafür das Stichwerkzeug von der Vorrichtung entfernt werden muss.

Nach einer Ausgestaltung der Erfindung ist die elektronische Steuerung wahlweise in einem ersten oder zweiten Betriebsmodus betreibbar, wobei
- im ersten Betriebsmodus die Dosierung einer Düngerportion ausschließlich von der Zahl der Zellen und/oder deren Größe abhängig ist, die bei einer Drehbewegung des Zellenrads den Abstreifer passieren, und
- im zweiten Betriebsmodus die Dosierung einer Düngerportion von dem Zeitintervall abhängig ist, in dem das Zellenrad von der elektronischen Steuerung in eine Winkelstellung gedreht ist, in der die Öffnung die Passage von Partikeln des Streuguts zwischen der vorderen Kante des Abstreifers und dem äu-ßeren Ende einer benachbarten Zellwand zulässt.

Bei dieser Ausgestaltung kann der Benutzer der Vorrichtung auswählen, auf welche Weise eine Düngerportion ausdosiert werden soll.

Nach einer Ausgestaltung der Erfindung ist die elektronische Steuerung zusätzlich in einem dritten Betriebsmodus betreibbar, in dem das Zellenrad von der elektronischen Steuerung dauerhaft in eine Winkelstellung gedreht ist, in der die Öffnung die Passage von Partikeln des Streuguts zwischen der vorderen Kante des Abstreifers und dem äußeren Ende einer benachbarten Zellwand zulässt, oder in dem es in einem Dauerbetrieb rotiert. In diesem Betriebsmodus kann der Benutzer der Vorrichtung die Ausgabe des Streuguts so schalten, das nicht mehr einzelne Düngerportionen aus dem Ausgabekanal ausgegeben werden, sondern daraus ein kontinuierlicher Strom von Partikeln herausrieselt. Die Förderung wird ein- oder ausgeschaltet, wobei das im Dauerbetrieb rotierende Zellenrad nach einer Ausgestaltung noch auf eine gewünschte Drehzahl eingestellt werden kann, um eine gewünschte Fördermenge einzustellen. Je nach Drehstellung des Zellenrads im Verhältnis zum Abstreifer kann sich auch bei der einfachen Offfenstellung eine gewünschte Drosselung der herausrieselnden Menge des Streuguts einstellen, die Dosierung ist hier aber möglicherweise nicht so genau. Die Vorrichtung wird durch die Möglichkeit eiiner dauerhaften Abgabe von Streugut vielseitiger einsetzbar.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung soll nachfolgend anhand von Ausführungsbeispielen näher erläutert werden. Es zeigen:
- Fig. 1:: eine Dosier- und Ausgabevorrichtung mit einem Gehäuse in einer Schnittansicht,
- Fig. 2:: eine vergrößerte Darstellung des Zellenrads im Übergangsbereich zwischen dem Streugutzuführungskanal und dem Ausgabekanal,
- Fig. 3:: eine seitliche Ansicht auf eine tragbare Dosier- und Ausgabevorrichtung,
- Fig. 4:: eine Schnittansicht durch eine Verstellvorrichtung zur Verstellung des Volumens der Zellen im Zellenrad,
- Fig. 5:: ein Diagramm zur Bestimmung der Anzahl der Zellen, aus deren Inhalten eine auszudosierende Düngerportion gebildet wird, und
- Fig. 6a - 6c:: eine abgewandelte Ausdosierung einer Düngerportion mit einem Zellenrad, das nur zwei Zellen aufweist.

Bei den Darstellungen handelt es sich im Wesentlichen um konkrete Ausführungsbeispiele. Die Erfindung ist hingegen nicht auf die dargestellten Ausführungsbeispiele beschränkt, sondern kann in fachmännischer Weise abgewandelt werden, um sie an einen bestimmten Anwendungsfall anzupassen.

Soweit dienlich sind in allen Figuren einander entsprechende Bauteile mit identischen Bezugsziffern bezeichnet. Aus Gründen der Übersichtlichkeit sind bei mehrfach auftretenden Bauteilen jedoch nicht stets alle mit Bezugsziffern versehen.

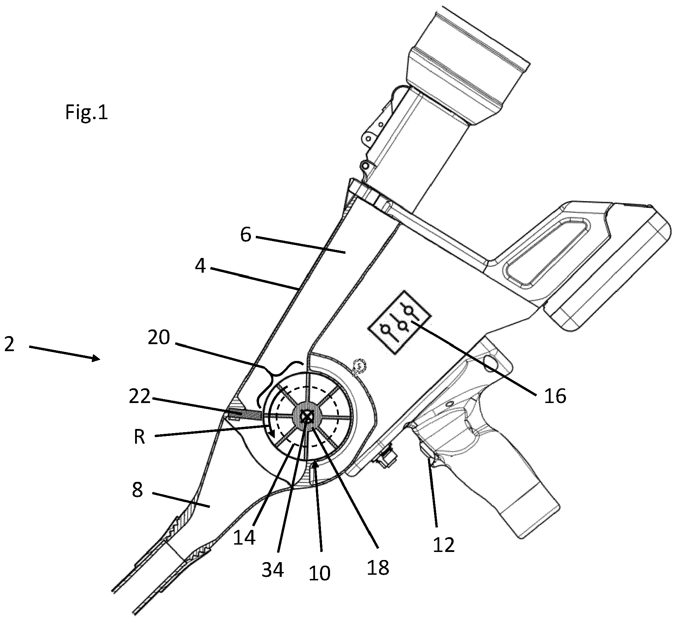

In Figur 1 ist eine Dosier- und Ausgabevorrichtung 2 mit einem Gehäuse 4 in der Gebrauchsstellung gezeigt. Im Innenraum des Gehäuses 4 ist in der gezeigten Gebrauchsstellung im oberen Bereich ein Streugutzuführungskanal 6 ausgebildet. Im unteren Bereich des Gehäuses 4 befindet sich der Ausgabekanal 8. Zwischen dem Streugutzuführungskanal 6 und dem Ausgabekanal 8 befindet sich die Dosiereinheit 10. Die Dosiereinheit 10 wird mit der Auslösevorrichtung 12 aktiviert, indem ein Anwender der Vorrichtung den Knopf der Auslösevorrichtung 12 betätigt. Die Auslösevorrichtung 12 übermittelt ein Signal an die elektronische Steuerung 16, die daraufhin den Stellmotor 14 aktiviert. Die elektronischen Steuerung 16 steuert den Stellmotor 14 in seinen Antriebsbewegungen. Bei dem Stellmotor 14 kann es sich beispielsweise um einen Servomotor oder auch um einen Schritt- oder Brushlessmotor handeln. Der Stellmotor 14 dreht das Zellenrad 18 im gezeigten Ausführungsbeispiel in die Rotationsrichtung R. Wenn sich das Zellenrad 18 auch oder ausschließlich in die entgegengesetzte Richtung drehen soll, ergibt sich eine abweichende Anordnung des Abstreifers 22 sowie gegebenenfalls auch der Größe und räumlichen Lage der Befüllungsöffnung 20 und der Entleerungsöffnung 24.

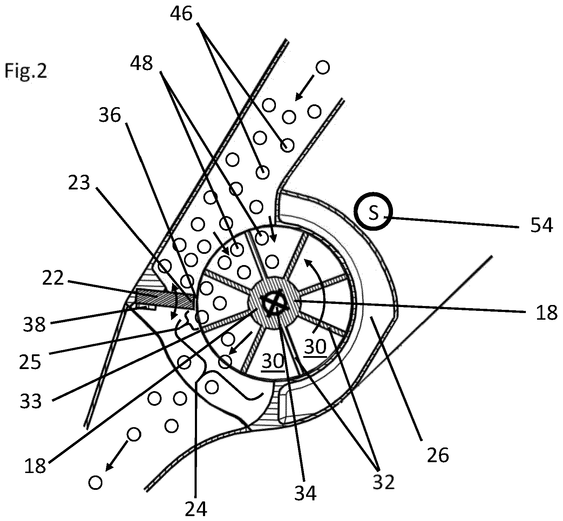

Die Fig. 2 zeigt eine vergrößerte Darstellung des Zellenrads 18 im Übergangsbereich zwischen dem Streugutzuführungskanal 6 und dem Ausgabekanal 8. In Figur 2 ist das Zellenrad 18 in einer Drehstellung gezeigt, in der das äußere Ende einer Zellwand 32 einer Zelle 30 nicht mehr genau der vorderen Kante 23 des Abstreifers 22 gegenübersteht, sondern das Zellenrad 18 mit der benachbarten Zellwand 32 um einige Winkelgrade weitergedreht worden ist. Zwischen der vorderen Kante 23 des Abstreifers 22 und dem äußeren Ende 33 der um einige Winkelgrade nach unten verdrehten Zellwand 32 hat sich dadurch eine Öffnung 25 aufgetan, durch die Partikel 48 des Streuguts 46 durch die Entleerungsöffnung 24 in den Ausgabekanal 8 riesein können. Im Übergang vom Streugutzuführungskanal 6 in das Zellenrad 18 befindet sich die Befüllungsöffnung 20. Die Befüllungsöffnung 20 befindet sich in der gezeigten Gebrauchsstellung der Dosier- und Ausgabevorrichtung 2 im oberen Teil des Zellenrads 18. Durch die Befüllungsöffnung 20 können in Figur 2 dargestellte Partikel 48 des Streuguts 46 allein durch die Schwerkraft aus dem Streugutzuführungskanal 6 in die Zellen 30 des Zellenrads 18 hineinrutschen, bis diese so weit gefüllt sind, dass keine weiteren Partikel 48 mehr nachrutschen können. Im Ausführungsbeispiel ist die Befüllungsöffnung 20 so groß, dass bei einem stillstehenden Zellenrad 18 mindestens zwei Zellen 30 mit Partikeln 48 befüllt werden können. Das Zellenrad 18 verfügt in dem in Figur 2 gezeigten Ausführungsbeispiel über insgesamt acht Zellen 30. Je nach Größe der Partikel 48 und/oder der gewünschten Menge an Streugut 46, das sich in einer Zelle 30 befinden soll, können in einem Zellenrad 18 auch mehr oder weniger Zellen 30 ausgebildet sein. Für die Dosier- und Ausgabevorrichtung 2 können verschiedene Zellenräder 18 vorgehalten werden, die nach Bedarf gegeneinander austauschbar sind. Die Befüllungsöffnung 20 ist im Verhältnis zur Größe der Partikel 48 auch groß genug, um diese in eine Zelle 30 passieren lassen zu können. Die Befüllungsöffnung 20 wird in Rotationsrichtung R des Zellenrads 18 vom Abstreifer 22 begrenzt.

Die einzelnen Zellen 30 des Zellenrads 18 sind durch Zellwände 32 voneinander getrennt und in ihrer Außenperipherie offen. Die in einer Zelle 30 befindliche Menge an Partikeln 48 bildet einen Bestandteil einer auszudosierenden Düngerportion. Eine auszudosierende Düngerportion kann aus dem Inhalt einer einzigen Zelle 30 oder aus dem Inhalt mehrerer Zellen 30 zusammengesetzt sein.

Am unteren Ende des Streugutzuführungskanals 6 befindet sich ein Abstreifer 22, der mit seiner dem Zellenrad 18 zugewandten vordere Kante 23 bis an den Umfangskreis des Zellenrads 18 heranreicht. Der Abstreifer 22 bildet zumindest einen Teil des Bodens des Streugutzuführungskanals 6. Zwischen der vorderen Kante 23 und dem Hüllkreis des Zellenrads 18 verbleibt ein Spalt 36, dessen Breite davon abhängig ist, wie weit der Abstreifer 22 an den Hüllkreis des Zellenrads 18 heranreicht. Die Größe des Spalts 36 kann an die Partikelgröße des Streuguts 46 angepasst sein, das mit der Vorrichtung 2 ausgegeben werden soll. Für die Vorrichtung 2 können verschiedene Abstreifer 22 vorgehalten werden, die gegeneinander austauschbar sind. Der Abstreifer 22 ist in einer Schraubbefestigung als einer lösbaren Befestigung 38 gehalten. Bei einer Drehbewegung des Zellenrads 18 in Rotationsrichtung R um die Drehachse 34 streichen die äußeren Enden 33 der Zellwände 32 an der vorderen Kante 23 des Abstreifers 22 entlang. Dabei werden die sich ganz oder zumindest überwiegend in den Zellen 30 befindlichen Partikel 48 in die offenen Zellen 30 hineingedrückt, während solche Partikel 48, die sich noch zumindest überwiegend im Streugutzuführungskanal 6 befinden und nicht mehr in die Zellen 30 hineinpassen, vom Abstreifer 22 im Streugutzuführungskanal 6 zurückgehalten werden. Der Abstreifer 22 kann aus einem elastomeren Material hergestellt sein, so dass er bei einer entsprechenden Belastung und Elastizität in die Richtung des in Figur 2 eingezeichneten Doppelpfeils flexibel ist, sich bei Wegfall der entsprechenden Belastung aber immer wieder in die Ausgangsstellung zurückbewegt.

Wenn eine in Rotationsrichtung R vorauseilende Zellwand 32 einer Zelle 30 bei einer Rotationsbewegung des Zellenrads 18 den Abstreifer 22 passiert hat, gelangt die hinter dieser vorauseilenden Zellwand 32 folgende Zelle 30 in den Bereich der Entleerungsöffnung 24, die den Übergang bildet zwischen dem Zellenrad 18 und dem Ausgabekanal 8. In der Gebrauchsstellung der Dosier- und Ausgabevorrichtung 2 befindet sich die Entleerungsöffnung 24 in einer Ebene unterhalb der vorderen Kante 23 des Abstreifers 22 und angrenzend an den unteren Teil des Zellenrads 18. Auch der Ausgabekanal 8 ist in der Gebrauchsstellung der Dosier- und Ausgabevorrichtung 2 unterhalb des Abstreifers 22 angeordnet und schließt sich an die Entleerungsöffnung 24 an. Da sich die Entleerungsöffnung 24 und der Ausgabekanal 8 unterhalb des Abstreifers 22 befinden, können in den Zellen 30 befindliche Partikel 48 bei einer entsprechenden Dimensionierung der Entleerungsöffnung 24 nach unten aus den Zellen 30 in den Ausgabekanal 8 und von dort in die zu düngenden Pflanzen oder Blumentöpfe herausfallen.

Das Zellenrad 18 ist im Schacht 26 im Gehäuse 4 gelagert, in dem der Streugutzuführungskanal 6 und der Ausgabekanal 8 münden. Die Befüllöffnung 20 und die Entleerungsöffnung 24 sind jeweils Ausnehmungen in der Wandung des Schachts 26, in die das Zellenrad 18 eingesetzt ist. Die Wandung des Schachtes 26 kann insbesondere in ihrem unteren Teil austauschbar ausgestaltet sein, weil dort der größte Verschleiß auftritt. Die Wandung kann dort auch aus einem besonderen Material hergestellt sein, wie beispielsweise einem elastischen Elastomer, um dort den reibungsbedingten Verschleiß zu verringern.

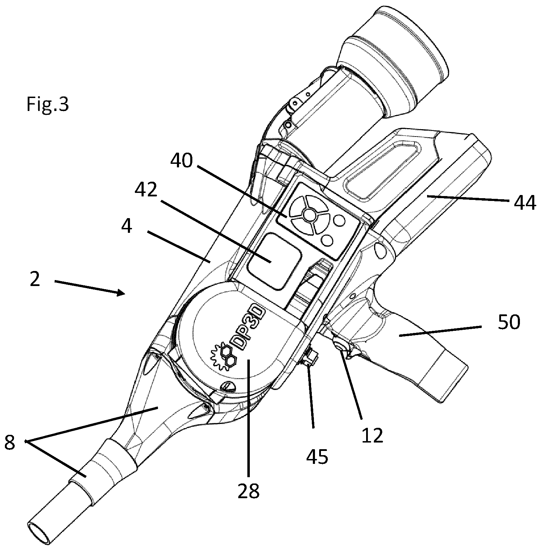

Die Fig. 3 zeigt eine seitliche Ansicht auf eine tragbare Dosier- und Ausgabevorrichtung 2. In dieser Ansicht ist die Position der Wartungsöffnung 28 gut erkennbar, die von einer Abdeckung verschlossen ist. In dieser Ansicht ist auch das Bedienfeld 40 sowie das Display 42 erkennbar, über die der elektronischen Steuerung 16 Steuerungsbefehle eingegeben und Informationen der elektronischen Steuerung 16 an den Benutzer abgelesen werden können. Am hinteren Ende der Dosier- und Ausgabevorrichtung 2 befindet sich ein Akkumulator 44, mit dem die elektronische Steuerung 16, das Bedienfeld 40, das Display 42 und der Stellmotor 14 mit Strom versorgt werden. An der Unterseite des Gehäuses 4 befindet sich ein Haltegriff 50, an dem auch die Auslösevorrichtung 12 angeordnet ist. In der seitlichen Ansicht ist auch die Steckdose 45 erkennbar, die zur Stromversorgung von und/oder zum Austausch von elektronischen Daten mit externen Geräten dienen kann.

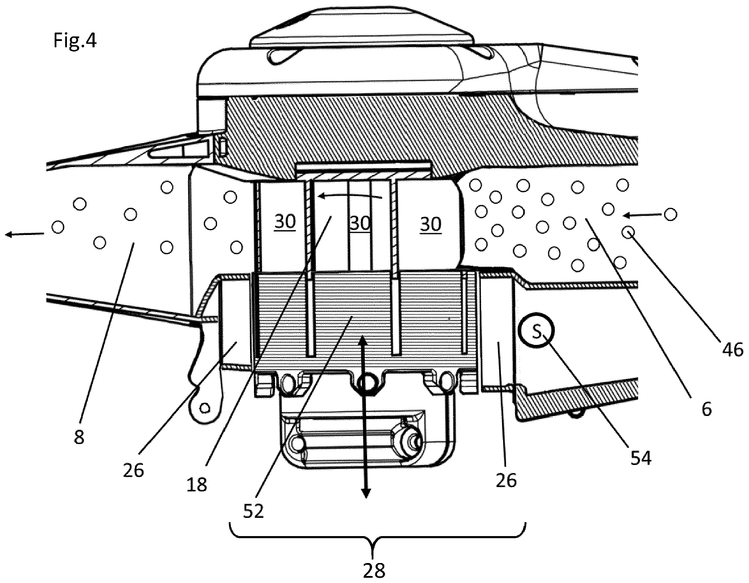

Die Fig. 4 zeigt eine Schnittansicht durch eine Verstellvorrichtung 52 zur Verstellung des Volumens der Zellen 30 im Zellenrad 18. In der Schnittansicht ist die Wartungsöffnung 28 gut erkennbar. Die Verstellvorrichtung 52 besteht im Wesentlichen aus einem Formkörper, der je nach aktueller Einstellung unterschiedlich tief in axialer Richtung des Zellenrads 18 in die Zellen 30 eintaucht. Die Verstellbarkeit des Formkörpers ist in Figur 4 durch den Doppelpfeil angedeutet. Der Formkörper ist ebenfalls in den Schacht 26 eingesetzt und in diesem in axialer Richtung des Zellenrads 18 beispielsweise mittels eines Schraubgewindes in unterschiedliche Stellungen einstellbar. Je nach Position des Formkörpers im Schacht 26 sind die Volumina der Zellen 30 maximal groß, wenn der Formkörper nicht in die Zellen 30 eintaucht, und entsprechend verkleinert, wenn das der Fall ist. Für die Ermittlung des verfügbaren Volumens der Zellen 30 kann ein berührungsloses Messsystem verwendet werden. Im gezeigten Ausführungsbeispiel ist im Gehäuse 4 ein Sensor 54 angeordnet, der auf magnetischer Basis arbeitet. Der Sensor 54 übermittelt sein Sensorsignal an die elektronische Steuerung 16. Die elektronische Steuerung 16 kann das Sensorsignal zur Berechnung der Anzahl der Zellen 30 verwenden, die für die Ausdosierung einer gewünschten Größe einer Düngerportion genutzt werden sollen. Die elektronische Steuerung kann das Sensorsignal auch dazu nutzen, dem Anwender über das Display 42 eine Einstellung der Verstellvorrichtung 52 vorzuschlagen, die dieser manuell einstellt oder durch Betätigung einer ok.-Taste auf dem Bedienfeld 40 bestätigt, worauf dann die elektronische Steuerung 16 die Verstellvorrichtung 52 entsprechend einstellt. Die Verstellung der Verstellvorrichtung 52 kann natürlich auch ausschließlich oder zusätzlich manuell erfolgen.

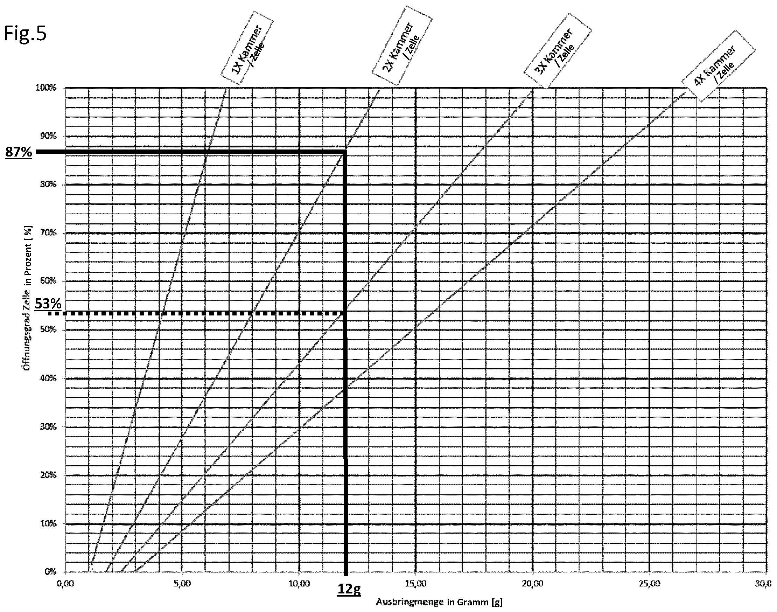

Die Fig. 5 zeigt ein Diagramm zur Bestimmung der Anzahl der Zellen 30, aus deren Inhalten die elektronische Steuerung eine auszudosierende Düngerportion bildet. Eine Pflanze benötigt beispielsweise 12 g Dünger. Es ist sinnvoll, die Düngermenge mit dem Inhalt von möglichst wenigen Zellen 30 zu dosieren, um ein schnelles Ergebnis zu erzielen. Dazwischen sinnvoll, möglichst weit geöffnete Zellen 30 mit maximalem Volumen zu verwenden. Anhand des gezeigten Diagramms ist ersichtlich, dass zwei Zellen 30 mit einem Zellvolumen von 87 % Öffnungsgrad ein gutes Dosierungsergebnis bereitstellt. Es wäre auch möglich, drei Zellen 30 mit einem Öffnungsgrad von 54 % für das Ausdosieren der Düngerportion mit 12 g Dünger zu nutzen.

Das wird allerdings länger dauern und wäre geringfügig ungenauer als genau die gewünschte Menge.

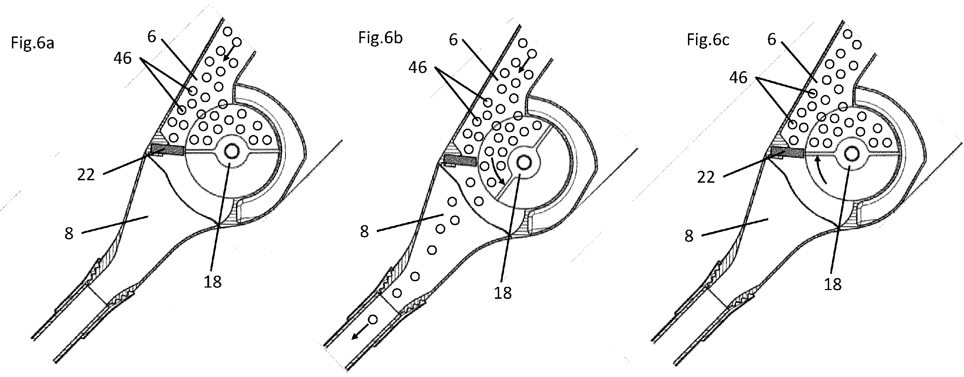

Die Fig. 6a - 6c zeigen eine abgewandelte Ausdosierung einer Düngerportion mit einem Zellenrad, das nur zwei Zellen mit einem konstanten Volumen aufweist. Im Bereich des Zellenrads 18 nehmen die Befüllungsöffnung 20 und die Entleerungsöffnung 24 jeweils einen Winkelbereich von ca. 90° in der Wandung des Schachtes 26 ein. Die Winkelanteile der Befüllungsöffnung 20, der Entleerungsöffnung 24 sowie der übrigen geschlossenen Wandung des Schachtes 26 können von diesem Ausführungsbeispiel abgesehen auch anders gewählt werden. Der übrige Umfangsbereich des Zellenrads 18 kann ganz oder teilweise geschlossen ausgebildet sein. Gesteuert wird die Düngermenge über die Zeit und/oder den Weg, in der das Zellenrad vor- und wieder zurückgedreht wird. In der Öffnungszeit, in der die Öffnung zwischen der vorderen Kante 23 des Abstreifers 22 und der Zellwand 32 groß genug ist, dass Partikel 48 des Streuguts 46 aus dem Streugutzuführungskanal 6 in den Ausgabekanal 8 fallen können, rieselt eine Menge an Partikeln 48 als eine Düngerportion durch diese Öffnung, die zumindest annähernd proportional ist zur Öffnungszeit. In der Figur 6a ist das Zellenrad 18 in einer geschlossenen Stellung gezeigt. Die obere Kammer 30 des Zellenrads ist mit Partikeln 48 befüllt. Das Zellenrad 18 befindet sich in einer Drehstellung, in der die Zellwand 32 das in dem Streugutzuführungskanal 6 vorgehaltene Streugut 46 zusammen mit dem Abstreifer 22 zurückhält. In Figur 6b ist das Zellenrad 18 in einer Drehstellung gezeigt, in der die Zellwand 32 so weit vom Abstreifer 22 entfernt ist, dass dazwischen eine Öffnung gegeben ist, durch die Partikel 48 durch die Entleerungsöffnung 24 in den Ausgabekanal 8 gelangen. Solange sich das Zellenrad 18 in dieser gezeigten Stellung befindet, kann Streugut 46 aus dem Streugutzuführungskanal 6 als ausdosierte Düngerportion aus der Dosier- und Ausgabevorrichtung 2 herausrieseln. In Figur 6c ist das Zellenrad 18 wieder zurück in die Ausgangsstellung bewegt worden, in der die Zellenwand 32 zusammen mit dem Abstreifer 22 die zuvor noch freie Öffnung schließt.

Um mit der in den Figuren 6a bis 6c gezeigten Verfahrensweise beispielsweise eine Düngerportion von 5 g auszudosieren, kann das Zellenrad 18 beispielsweise um einen Winkelgrad von 22° aufdrehen und gleich wieder zudrehen. Um eine Düngerportion von 15 g auszudosieren, kann das Zellenrad 18 beispielsweise um 30° aufdrehen und dann direkt wieder zufahren. Bei einer Düngerportion von 50 g kann das Zellenrad 18 beispielsweise um 44° aufdrehen, einen bestimmten Zeitabschnitt offenbleiben und dann wieder zufahren.

Der Vorteil der in den Figuren 6a bis 6c dargestellten Vorgehensweise liegt darin, dass die Größe einer Düngerportion über Bedieneingaben auf dem Bedienfeld bestimmt werden kann und die elektronische Steuerung 16 dazu ein passendes Bewegungsprofil des Zellenrads 18 bestimmt und ausführt. Gesonderte Verstellungen einer Verstellvorrichtung 52 sind nicht erforderlich. Als Nachteil ist anzusehen, dass die Ausdosierung wiederum abhängig ist von der Winkelstellung, in der die Dosier- und Ausgabevorrichtung 2 vom Anwender gehalten wird. Es muss auch mit einer im Vergleich zu Zellrädern mit einer Volumeneinstellung größeren Ungenauigkeit bei der Ausdosierung einer Düngerportion gerechnet werden.

Als weitere Abwandlung der in den Figuren 6a bis 6c dargestellten Vorgehensweise ist es auch möglich, dass Zellenrad 18 um einen Winkel von 180° zu drehen, um dabei die in einer Zelle 30 befindliche gesamte Menge an Partikeln 48 als Düngerportion auszugeben. Hier können noch Mengenkorrekturen vorgenommen werden, indem vor oder nach der Ausgabe der einen großen Menge aus der Zelle 30 noch kleinere Zusatzmengen an Partikeln 48 durch das vorstehend beschriebene kurz öffnen und schließen der Öffnung zu dosiert werden.

### Bezugszeichenliste

- 2: Dosier- und Ausgabevorrichtung
- 4: Gehäuse
- 6: Streugutzuführungskanal
- 8: Ausgabekanal
- 10: Dosiereinheit
- 12: Auslösevorrichtung
- 14: Stellmotor
- 16: Steuerung
- 18: Zellenrad
- 20: Befüllungsöffnung
- 22: Abstreifer
- 23: vordere Kante
- 24: Entleerungsöffnung
- 25: Öffnung
- 26: Schacht
- 28: Wartungsöffnung
- 30: Zelle
- 32: Zellwand
- 33: äußeres Ende einer Zellwand
- 34: Drehachse
- 36: Spalt
- 38: Befestigung
- 40: Bedienfeld
- 42: Display
- 44: Akkumulator
- 45: Steckdose
- 46: Streugut
- 48: Partikel
- 50: Haltegriff
- 52: Verstellvorrichtung
- 54: Sensor
- R: Rotationsrichtung

## Patentansprüche

1. Tragbare Dosier- und Ausgabevorrichtung (2) für ein Streugut mit einem Gehäuse (4), in dem ein Streugutzuführungskanal (6), eine mit einer Auslösevorrichtung (12) verbundene Dosiereinheit (10) und zumindest ein Ausgabekanal (8) ausgebildet sind, wobei die Dosiereinheit (10) einen angetriebenen Stellmotor (14) und eine elektronische Steuerung (16) aufweist, **dadurch gekennzeichnet, dass** in der Förderstrecke zwischen dem Streugutzuführungskanal (6) und dem Ausgabekanal (8) als Dosiereinheit (10) ein Zellenrad (18) verwendet ist, das mit dem von der elektronischen Steuerung (16) gesteuerten Stellmotor (14) antreibbar ist, zwischen dem Streugutzuführungskanal (6) und dem Außenumfang des Zellenrads (18) eine Befüllungsöffnung (20) ausgebildet ist, im Umfangsbereich des Zellenrads (18) ein Abstreifer (22) angeordnet ist, dessen dem Zellenrad (18) zugewandte vordere Kante (23) bis an den Umfangskreis des Zellenrads (18) heranreicht, der Abstreifer (22) zumindest einen Teil des Bodens des Streugutzuführungskanals (6) bildet, in der Gebrauchsstellung der Dosier- und Ausgabevorrichtung (2) in einer Ebene unterhalb der vorderen Kante des Abstreifers (22) eine Entleerungsöffnung (24) ausgebildet ist, und der Ausgabekanal (8) in der Gebrauchsstellung der Dosier- und Ausgabevorrichtung (2) unterhalb des Abstreifers (22) angeordnet ist, der sich an die Entleerungsöffnung (24) anschließt.

2. Tragbare Dosier- und Ausgabevorrichtung (2) nach Anspruch 1, **dadurch gekennzeichnet, dass** die Befüllungsöffnung (20) in Rotationsrichtung (R) des Zellenrads (18) vom Abstreifer (22) begrenzt wird.

3. Tragbare Dosier- und Ausgabevorrichtung (2) nach Anspruch 1 oder 2, **dadurch gekennzeichnet, dass** sich die Befüllungsöffnung (20) am Außenumfang des in der Gebrauchsstellung der Dosier- und Ausgabevorrichtung (2) oberen Teils des Zellenrads (18) befindet.

4. Tragbare Dosier- und Ausgabevorrichtung (2) nach einem der vorhergehenden Ansprüche, **dadurch gekennzeichnet, dass** der Abstreifer (22) oder das Zellenrad (18) aus einem flexiblen Material hergestellt ist.

5. Tragbare Dosier- und Ausgabevorrichtung (2) nach einem der vorhergehenden Ansprüche, **dadurch gekennzeichnet, dass** der Abstreifer (22) im Gehäuse (4) in einer lösbaren Befestigung (38) austauschbar gehalten ist.

6. Tragbare Dosier- und Ausgabevorrichtung (2) nach einem der vorhergehenden Ansprüche, **dadurch gekennzeichnet, dass** der Abstreifer (22) in seiner räumlichen Lage verstellbar in einer Befestigung (38) gehalten ist.

7. Tragbare Dosier- und Ausgabevorrichtung (2) nach einem der vorhergehenden Ansprüche, **dadurch gekennzeichnet, dass** das Zellenrad (18) in einem Schacht (26) im Gehäuse (4) gelagert ist, in dem der Streugutzuführungskanal (6) und der Ausgabekanal (8) münden, in der Wandung des Schachts (26) sind die Befüllungsöffnung (20) und die Entleerungsöffnung (24) ausgebildet, und das Zellenrad (18) ist in axialer Richtung durch eine Wartungsöffnung (28) in den Schacht (26) einsetzbar und aus dem Schacht (26) entnehmbar.

8. Tragbare Dosier- und Ausgabevorrichtung (2) nach Anspruch 7, **dadurch gekennzeichnet, dass** der Schacht (26) und/oder Teile des Schachts (26) austauschbar ausgestaltet sind.

9. Tragbare Dosier- und Ausgabevorrichtung (2) nach einem der vorhergehenden Ansprüche, **dadurch gekennzeichnet, dass** die Größe der Befüllungsöffnung (20) und/oder der Zellen (30) mit einer Verstellvorrichtung (52) verstellbar ausgebildet ist.

10. Tragbare Dosier- und Ausgabevorrichtung (2) nach Anspruch 9, **dadurch gekennzeichnet, dass** die elektronische Steuerung (16) mit einem Sensor (54) verbunden ist, mit dem das nutzbare Volumen der Zellen (30) ermittelbar ist.

11. Tragbare Dosier- und Ausgabevorrichtung (2) nach Anspruch 9 oder 10, **dadurch gekennzeichnet, dass** die Größe einer auszudosierenden Düngerportion über ein Eingabemittel in die elektronische Steuerung (16) eingebbar ist, und die elektronische Steuerung (16) eine Programmierung aufweist, mit der
- für die eingegebene Größe der Düngerportion eine Anzahl der für die Ausdosierung genutzten Zellen und eine benötigte Größe dieser für die Ausdosierung genutzten Zellen ermittelbar ist,
- die elektronische Steuerung (16) für die ermittelte Zahl der benötigten Zellen einen entsprechenden Stellbefehl für den Stellmotor (14) und für die ermittelte benötigte Größe der Zellen einen entsprechenden Stellbefehl an die Verstellvorrichtung generiert, und
- die generierten Stellbefehle an den Stellmotor (14) und die Verstellvorrichtung übermittelt werden, wenn ein Ausgabebefehl an die elektronische Steuerung (16) übermittelt wird.

12. Tragbare Dosier- und Ausgabevorrichtung (2) nach einem der vorhergehenden Ansprüche, **dadurch gekennzeichnet, dass** die elektronische Steuerung eine Schnittstelle zu einer Steuerung einer stationären Förderanlage für Pflanzen aufweist.

13. Tragbare Dosier- und Ausgabevorrichtung (2) nach einem der vorhergehenden Ansprüche, **dadurch gekennzeichnet, dass** der Ausgabekanal um ein Stichwerkzeug verlängert ist.

14. Verfahren zur Dosierung von Partikeln (48) eines in einem Streugutzuführungskanal (6) bevorrateten Streuguts (46) in einer mit einer Auslösevorrichtung (12) verbundenen und mit einem von einer elektronischen Steuerung (16) gesteuerten Stellmotor (14) angetriebenen Dosiereinheit (10) und zur Ausgabe der dosierten Partikel (48) über einen Ausgabekanal (8) mit einer tragbaren Vorrichtung (2), **dadurch gekennzeichnet, dass** die Dosierung mittels eines Zellenrads (18) erfolgt, das in der Förderstrecke zwischen dem Streugutzuführungskanal (6) und dem Ausgabekanal (8) als Dosiereinheit (10) verwendet ist und das mit dem von der elektronischen Steuerung (16) gesteuerten Stellmotor (14) antreibbar ist, wobei das im Streugutzuführungskanal (6) an den Umfangsbereich des Zellenrads (18) anstehende Streugut (46) bei einer Rotationsbewegung des Zellenrads (18) von einem im Umfangsbereich des Zellenrads (18) angeordneten Abstreifer (22) zurückgehalten wird, dessen dem Zellenrad (18) zugewandte vordere Kante (23) bis an den Umfangskreis des Zellenrads (18) heranreicht.

15. Verfahren nach Anspruch 14, **dadurch gekennzeichnet, dass** die elektronische Steuerung (16) wahlweise in einem ersten oder zweiten Betriebsmodus betreibbar ist, wobei
- im ersten Betriebsmodus die Dosierung einer Düngerportion ausschließlich von der Zahl der Zellen (30) und/oder deren Größe abhängig ist, die bei einer Drehbewegung des Zellenrads (18) den Abstreifer (22) passieren, und
- im zweiten Betriebsmodus die Dosierung einer Düngerportion von dem Zeitintervall abhängig ist, in dem das Zellenrad (18) von der elektronischen Steuerung (16) in eine Winkelstellung gedreht ist, in der die Öffnung (25) die Passage von Partikeln (48) des Streuguts (46) zwischen der vorderen Kante (23) des Abstreifers (22) und dem äußeren Ende (33) einer benachbarten Zellwand (32) zulässt.

16. Verfahren nach Anspruch 15, **dadurch gekennzeichnet, dass** die elektronische Steuerung (16) zusätzlich in einem dritten Betriebsmodus betreibbar ist, in dem das Zellenrad (18) von der elektronischen Steuerung (16) dauerhaft in eine Winkelstellung gedreht ist, in der die Öffnung (25) die Passage von Partikeln (48) des Streuguts (46) zwischen der vorderen Kante (23) des Abstreifers (22) und dem äu-ßeren Ende (33) einer benachbarten Zellwand (32) zulässt, oder in dem es in einem Dauerbetrieb rotiert.

17. Verfahren nach einem der Ansprüche 14 bis 16, **dadurch gekennzeichnet, dass** für das Verfahren eine tragbare Dosier- und Ausgabevorrichtung (2) nach einem der Ansprüche 1 bis 13 verwendet wird.
